# EUROPEAN PATENT SPECIFICATION

(11) **EP 3 473 397 B1**
(45) Date of publication and mention of the grant of the patent: **10.03.2021**
(21) Application number: 17197799.4
(22) Date of filing: 23.10.2017
(51) Int. Cl.: B29B 11/16

(54) **ASSEMBLY, SYSTEM AND METHOD FOR MAKING A PREFORMED SHELL**
ANORDNUNG, SYSTEM UND VERFAHREN ZUR HERSTELLUNG EINER VORGEFORMTEN SCHALE
ENSEMBLE, SYSTÈME ET PROCÉDÉ POUR FABRIQUER UNE COQUE PRÉFORMÉE

(43) Date of publication of application: 24.04.2019
(73) Proprietor: Aleda SA, 6900 Lugano (CH)
(72) Inventor: RIGAMONTI, Daniele, 6900 LUGANO (CH)
(74) Representative: Crippa, Paolo Ernesto

(56) References cited:
- WO-A1-2014/064085
- WO-A1-2017/140752
- DE-A1-102012 024 060

## Description

### . Field of the invention

The present invention relates to an assembly for preforming a sheet of reinforcement fabric and to a system comprising said assembly.

The present invention also relates to a method for preforming a sheet of reinforcement fabric.

In particular, said method allows making a preformed shell.

### . Prior art

Methods for making panels or shells of composite material are generally known. A known type of composite material envisages providing a matrix containing a reinforcement, e.g. woven, e.g. made by interlacing or weaving bundles of carbon fiber bundles pre-impregnated ("pre-preg") with thermoplastic material, e.g. amorphous polymeric or semi-crystalline material, in which said reinforcement is dispersed, which for example may be in the form of one or more sheets of carbon fiber materials or other material for reinforcements, which imparts the desired mechanical properties, but prevalently a desired cosmetic effect, to the composite material, which is commonly known with the generic term of cosmetic carbon fabric.

Sheets of reinforcement fabric to be preformed of the known type may be impregnated with thermoplastic glue or alternatively may be free from thermoplastic impregnation material and intended to be dry-preformed.

Components, such as panels for body or crash helmets, suitcases, sports equipment, chassis fairings or hulls, aircraft fuselage parts, which may have a structural function, but which prevalently also have a cosmetic function, are increasingly more in demand. So, as cosmetic components, the visible pattern in these components of the fiber or of the fabric or of the reinforcement material must be appealingly tidy or pleasant and the original patterns must not be distorted.

In some cases, the reinforcement is in form of discrete elements, such as snub-shaped elements or elongated-shape fibers, which are collected in bundles of reinforcement fibers, or the reinforcement may consist of fibers some of which are mutually aligned and others which are mutually crossed to form a fabric having a weft and warp which forms a pattern or a cosmetic effect, or the reinforcement may comprise metal plates or films, e.g. made of aluminum. Some known types of reinforcement fibers are made of carbon fiber, glass fiber and aramid fiber.

An example of reinforced composite material with a reinforcement comprising plates or films is the making of heat screens of fiber glass composite material with aluminum film for heat screening, e.g. adapted to cover the mufflers of motor vehicles. In this case, the problem is functional instead, because the film, which forms an aluminum skin, must not tear or crack during forming, to prevent creating an access route for the heat to reach the vehicle parts underneath.

Hereinafter, the expression "reinforcement fabric" will be used to define all these components or reinforcement elements for composite materials, such as for example: non-woven fabrics, interlaced fabrics, films, etc., and a combination thereof.

In some typical embodiments, the reinforced composite material is made in form of preformed sheets, e.g. by using specific molds, said preformed sheets forming, for example, the core of protective shells of motorcycle crash helmets, as well as suitcases, or professional sports equipment, high-performance vehicle chassis fairing or hulls of boats, as well as parts of the fuselage of professional aircraft or vehicle body panels.

Despite not exclusively used to perform a cosmetic function, such sheets of reinforced composite material are frequently arranged in portions in sight and therefore one of the main tasks of such sheets of composite material is that the cosmetic appearance is important, both in terms of the tidy arrangement of weft and warp of the fiber bundles to form an interlaced fabric and in terms of the possible patterns specifically created by arranging the fibers or bundles of fibers or the reinforcement fabric. For example, some known reinforced composite material sheets display a net-like or a herringbone or checkered interlacing.

Typically, the sheets of reinforced composite material are made by preheating the pre-impregnated fabric with thermoplastic material in an oven, which, by raising the temperature, makes the material plastically deformable, e.g. rubbery or ductile, to form a sheet of pre-impregnated fabric, and which is successively inserted in a preforming mold as long as it behaves as a ductile material.

After preforming and by cooling, the pre-impregnated fabric sheet becomes a shell which keeps the shape set by the mold (i.e. the preforming), which may be successively consolidated, and thus blocked in its shape, typically by covering the preformed shell with one or more layers of thermosetting materials to allow the consolidated shell thus obtained to keep the desired shape also in temperature conditions higher than the vitreous transition temperature of the material constituting the thermoplastic phase.

Also in the cases in which non-pre-impregnated sheet of fabric are used, i.e. of the type intended to be dry-preformed, the step of preheating the sheet of reinforcement fabric is typically envisaged to make it more easily deformable.

It is generally known to proceed with the step of preforming by arranging a frame on which the reinforcement fabric to be preformed is laid between the half-molds of the preforming mold. However, this system necessarily generates imperfections at least in the mutual arrangement of the reinforcement elements which constitute the reinforcement fabric, caused by excessive relaxations and/or stretching of the sheet of reinforcement fabric, resulting in an unsatisfactory appearance or a crack or snag or wrinkles, which are cosmetically unpleasant, sometimes even forcing to conceal from sight the sheets of composite material in the product intended to be marketed, to hide the imperfections, such as wrinkles or snags due to preforming.

In the attempt to reduce the occurrence of such cosmetic imperfections, one or more expert operators are usually required to keep some edges of the sheet of reinforcement fabric manually taut by gripping them manually, while the mold is gradually closed during preforming, checking that the pattern remains tidy at the same time. Such a strategy requires the employment of expert personnel and makes it impossible to automate the production system.

Document EP-2875931 discloses an automated preforming method which uses a rectangular frame provided with gripping clamps of a sheet of pre-impregnated fabric mounted on opposite mutually sliding profiled bars, said bars forming two opposite sides of the rectangular frame and sliding in order to approach each other when moved by an actuator, relaxing the fabric during the closing of the mold. The relative approach travel of such opposite bars is controlled by measuring the downward travel of the upper half-mold or the closing speed of the two half-molds.

Although partially advantageous in providing a method which can be automated, such solution substantially does not solve the problem. By controlling the gripping of the sheet of pre-impregnated fabric in synchronized manner on opposite sides, such solution necessarily imposes that all the clamps and both opposite sides move at the same time. Indeed, providing a frame having opposite sides in relative synchronized approach cannot be applied if the mold has a complex, non-regular spatial shape, not square or rectangle. Similar solutions are known from DE102012024060, WO2014064085, WO2017140752.

So the need is strongly felt to provide a forming method capable of eliminating or at least minimizing the presence of cosmetic faults on a preformed shell.

The need is strongly felt to provide an assembly and an automated method which allows managing the tensioning and/or the releasing of the sheet of reinforcement fabric to guarantee that the sheet of reinforcement fabric does not develop localized snags or wrinkles during preforming also when it is made with molds having complex three-dimensional spatial shape.

The need is strongly felt to also provide an assembly and an automated method which allows managing the tensioning and/or the releasing of the sheet of pre-impregnated reinforcement fabric to guarantee that, during preforming, the sheet of pre-impregnated reinforcement fabric does not develop snags or localized wrinkles also when it is made with molds having complex three-dimensional spatial shape.

### . Solution

It is an object of the present invention to solve the drawbacks of the prior art and to provide a solution to the needs described hereto with reference to the prior art.

These and other objects are achieved by an assembly according to claim **1,** as well as by a system according to claim **10,** as well as by a method according to claim **11.**

### . Figures

Further features and advantages of the assembly, of the system and of the method will be apparent from the following description of its preferred embodiments, given by way of non-limiting examples, with reference to the accompanying figures, in which:

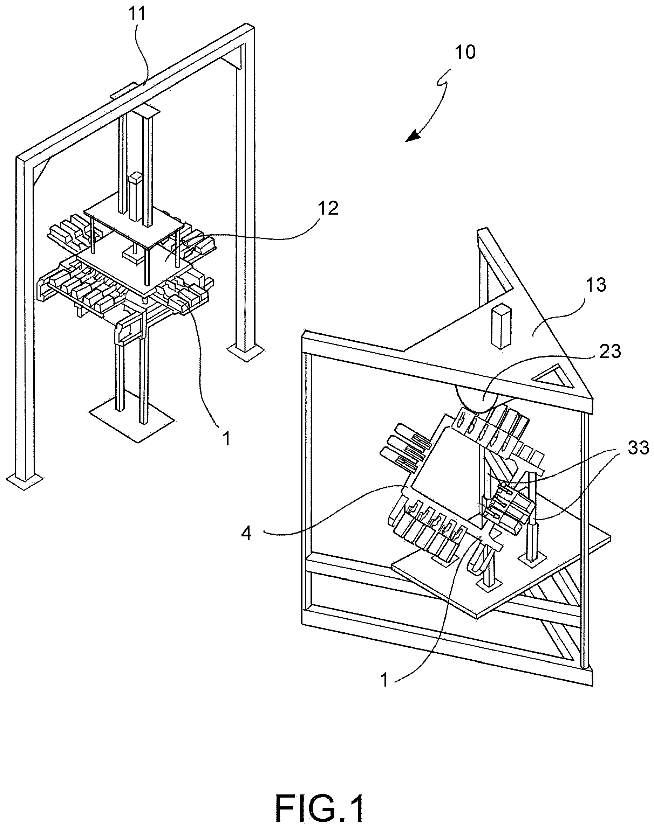

- figure 1 is an axonometric view, which diagrammatically illustrates a system comprising a preheating station and a preforming station, according to an embodiment, in which the lower preforming half-mold is not shown for the sake of clarity, and the sheet of reinforcement fabric is also not shown for the sake of clarity;

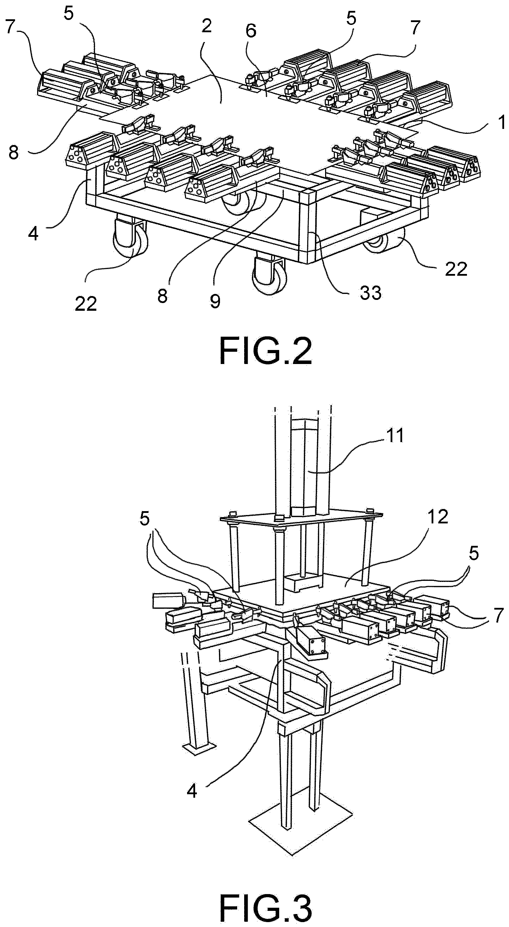

- figure 2 is an axonometric view of a sheet of reinforcement fabric mounted on an assembly, according to an embodiment;
- figure 3 is a perspective view of a preheating station of a system according to an embodiment;

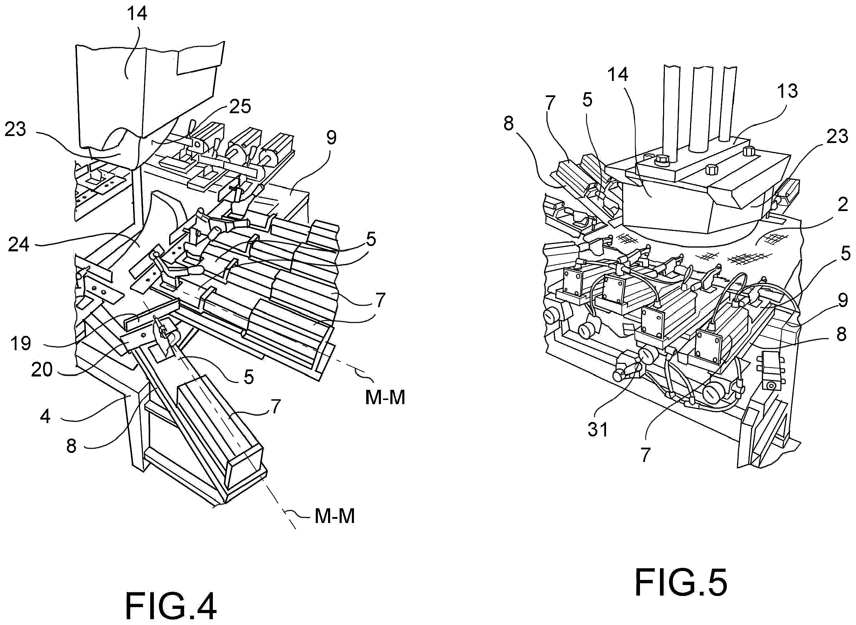

- figure 4 is a perspective view, which diagrammatically illustrates an assembly placed in a preforming system, according to an embodiment, in which the mold is open and the sheet of reinforcement fabric is not shown for the sake of clarity;
- figure 5 is an axonometric view of a sheet of reinforcement fabric mounted on an assembly placed in a preforming station, according to an embodiment during the closing of the preforming mold;

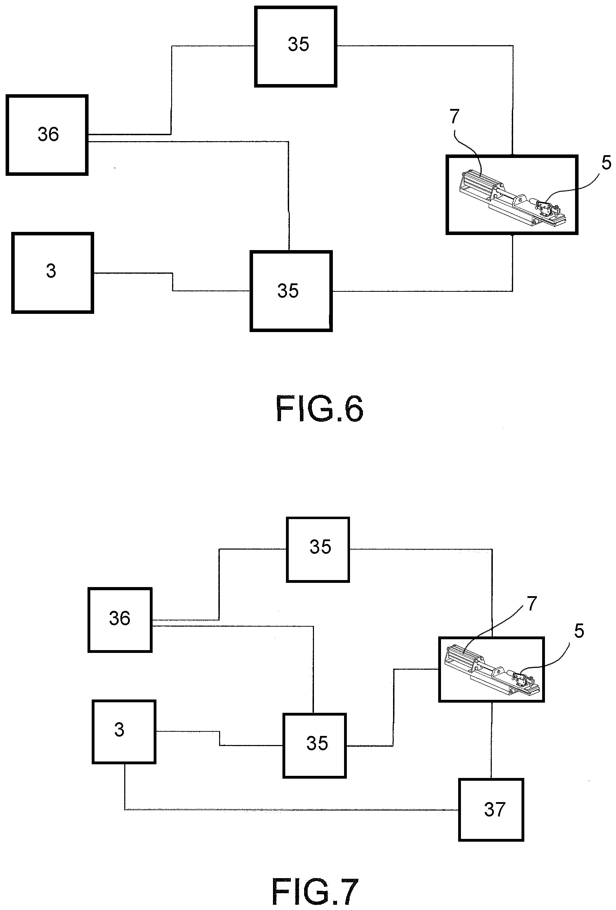

- figures 6 and 7 are block charts, which show a control and actuating unit operatively connected to the moving system, according to some embodiments;

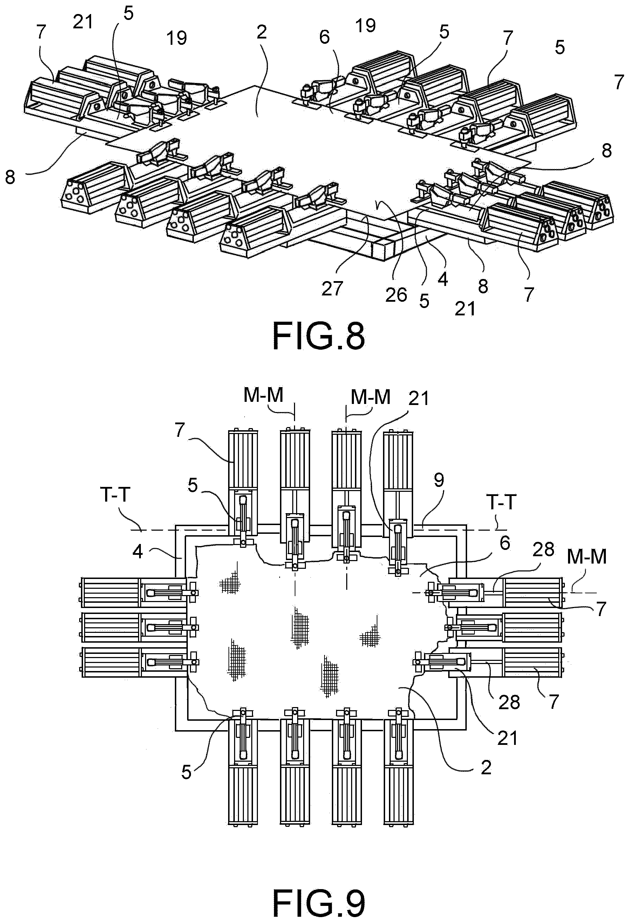

- figure 8 is an axonometric view of a sheet of reinforcement fabric mounted on an assembly, according to an embodiment;
- figure 9 is a plant and top view of a sheet of reinforcement fabric mounted on an assembly, according to an embodiment;

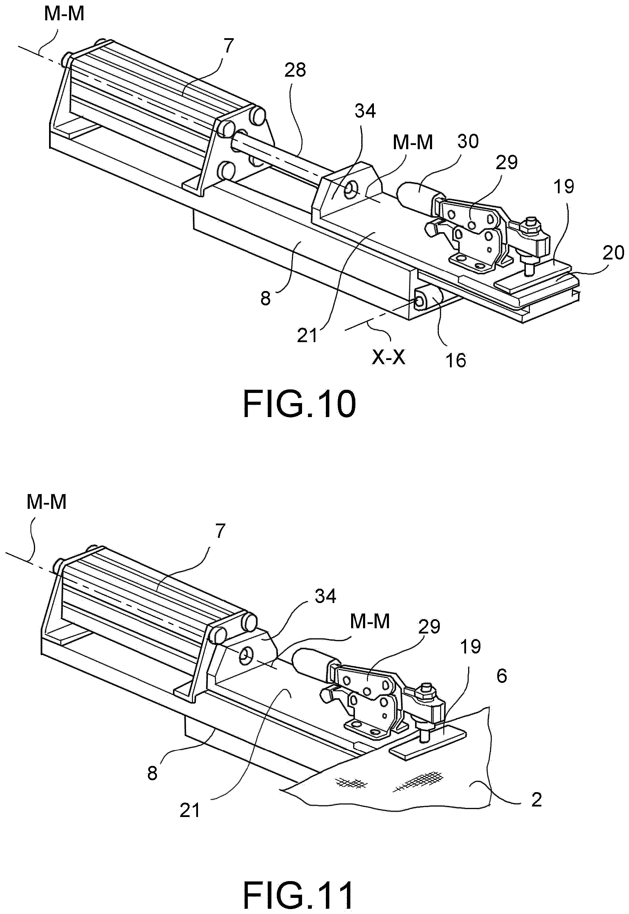

- figures 10 and 11 are axonometric views of a gripping device associated with a respective moving device and a support, according to an embodiment;

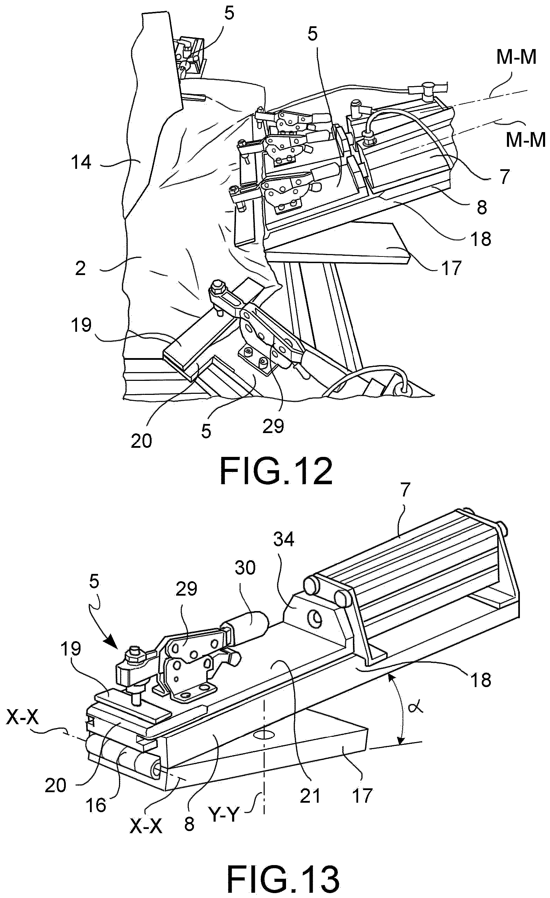

- figure 12 is a perspective view, which shows a portion of a sheet of reinforcement fabric mounted on an assembly, according to an embodiment, and placed in a preforming station, during the closing of the preforming mold;
- figures 13 is an axonometric view of a gripping device associated with a respective moving device and a support, according to an embodiment;

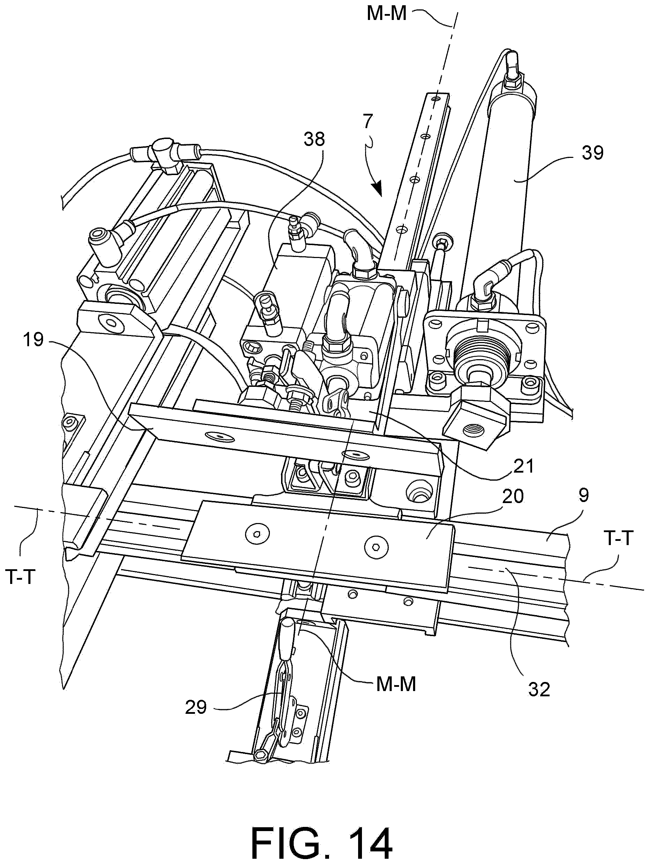

- figure 14 is a perspective view of a portion of an assembly, according to an embodiment.

### . Description of some preferred embodiments

According to a general embodiment, an assembly 1 is provided for preforming a sheet of reinforcement fabric 2. The word "sheet" indicates an intermediate process product in a flexible state, e.g. plastically deformable.

Preferably, said sheet of reinforcement fabric 2 is a pre-impregnated (pre-preg) sheet. The expression "pre-impregnated fabric" means a reinforcement fabric impregnated with thermoplastic material. According to an embodiment, said sheet of reinforcement fabric 2 is a sheet of fabric impregnated with a thermoplastic glue. According to an embodiment, said sheet of reinforcement fabric 2 is a sheet of dry fabric.

Said sheet of reinforcement fabric 2 is intended to be subjected to at least one deformation action to make a preformed shell. The expression "preformed shell" means a preformed panel, e.g. in form of sheet or of shell, which is thin but blocked in its shape, which may be a finished product or which may be an intermediate process product, e.g. an intermediate process product adapted to form the core of a finished product.

According to an embodiment, said preformed shell forms the core of a finished product, e.g. the core of a shell of a motorcycle crash helmet, the core of a shell of a suitcase, the core of a piece of sports equipment, such as for example a ski, the core of a body panel, the core of a shell made of cosmetic carbon. According to an embodiment, said preformed shell is consolidated by covering with thermosetting material, preferably reticulated, thus becoming a consolidated shell.

Said assembly 1 further comprises at least one frame 4. According to an embodiment, said frame 4 comprises frame beams 9, e.g. profiled beams, each frame beam 9 having elongated shape which extends along a longitudinal beam direction of development T-T, said frame beams 9 forming a tubular structure adapted to impart structural stability to said assembly 1, wherein said frame 4 also comprises frame uprights. According to an embodiment, said frame 4 comprises ground contact units 22, e.g. wheels or casters or runners, adapted to allow the movement of the frame 4, e.g. between contiguous stations in a preforming system 10.

Said assembly 1 comprises a plurality of gripping devices 5 adapted to grip the sheet of reinforcement fabric 2. According to an embodiment, each gripping device 5 comprises two opposite jaws 19, 20, which cooperate to grip a portion of the sheet of reinforcement fabric by pressing on opposite sides of said sheet of reinforcement fabric. Preferably, said opposite jaws 19, 20 are movable with respect to one another to achieve both a gripping action and a releasing action, opposite to said gripping action, of the portion of the sheet of reinforcement fabric 2 which they are intended to grip. According to an embodiment, said gripping device 5 comprises a locking device 29, adapted to lock the relative position of the opposite jaws 19, 20, e.g. when they are closed. Preferably, said locking device 29 comprises a safety knob 30, adapted to be grasped by an operator in order to manually either activate or deactivate the locking device 29, e.g. in faulty or emergency conditions.

Said plurality of gripping devices 5 are associated either directly or indirectly to said at least one frame 4, e.g. by means of a support 8.

Each gripping device 5 of said plurality of gripping devices 5 is adapted to grip a margin portion 6 of the sheet of reinforcement fabric 2. Preferably, said plurality of gripping devices 5 are substantially in the form of arms movable in mutually independent manner, said arms being provided with said jaws 19, 20, adapted to grip margin portions 6 of the sheet of reinforcement fabric 2 like a plurality of hands.

Said assembly 1 further comprises a moving system comprising a plurality of first moving devices 7.

Advantageously, the movement of each first moving device 7 is independent from that of the other first moving devices 7 of said moving system.

Further advantageously, each gripping device 5 of said plurality of gripping devices is associated with a first moving device 7. In this manner, each gripping device 5 is associated with a respective first moving device 7. Preferably, each first gripping device 7 is associated with a respective gripping device 6.

According to an embodiment, each first moving device 7 is adapted to move each said gripping device 5 of said plurality of gripping devices independently of the others. In other words, each gripping device 5 is intended to be moved independently of the others by a respective first moving device 7. In this manner, when said sheet of reinforcement fabric 2 is gripped by a said plurality of gripping devices 5, each gripping device 5 can move independently of the others to guide localized deformations of the sheet of reinforcement fabric 2, localized deformations which occur during the deformation action of the sheet of reinforcement fabric 2.

For example, during preforming, the sheet of reinforcement fabric 2 gripped by said gripping devices 5 is closed in a preforming mold 14, in which it is subjected to said deformation action which in this case is induced by mechanical bias.

By virtue of such assembly 1 comprising gripping elements 5 movable independently of the others, the localized deformation of the sheet of reinforcement fabric is allowed during the closing of the preforming mold 14. Additionally, the moving of each gripping device 5 towards the preforming mold 14 can accompany such localized deformation of the sheet of reinforcement fabric, without because of this losing the grip on the respective margin portion 6. At the same time, during preforming, providing gripping elements 5 which are movable in mutually independent manner allows keeping the sheet of reinforcement fabric 2 locally taut, i.e. to keep a predetermined local traction tension value. Preferably, said margin portion 6 of the sheet of reinforcement fabric 2 is intended to remain outside the preforming mold 14 during preforming.

According to an embodiment, said first moving device 7 moves the respective gripping device 5 both towards and away from said mold 14 during preforming along a local direction of movement M-M.

For example, before preforming, the sheet of reinforcement fabric 2, e.g. the pre-impregnated sheet of reinforcement fabric gripped by said gripping devices 5, is heated being subjected to said deformation action, which in this case is thermally induced. According to an embodiment, said first moving device 7 moves the respective gripping device 5 so as to accompany the deformation action thermally induced by heating.

According to a preferred embodiment, the independent movement of each gripping device 5 of said plurality of gripping devices is controlled as a function of the local force or of the local traction pressure to which the sheet of reinforcement fabric 2 was subjected to obtain a stress distribution locally of desired value on the sheet of reinforcement fabric 2. In this manner, it is avoided to locally, and consequently globally, overstress the sheet of reinforcement fabric 2, e.g. during preforming.

According to an embodiment, said assembly 1 comprises at least one sensor which locally detects the traction force or pressure to which the sheet of reinforcement fabric 2 was subjected.

Providing said at least one sensor allows controlling the independent movement of said gripping devices 5 on the basis of information on the local stress state of the sheet of reinforcement fabric.

According to a preferred embodiment, said assembly 1 comprises at least one control and actuating unit 3, which receives information from said at least one sensor and transmits at least one control signal to the moving system. Preferably, said at least one control and actuating unit 3 comprises at least one programmable logic controller or PLC. Preferably, said at least one control and actuating unit 3 comprises at least one data processing unit and at least one control unit operatively connected to said moving system.

According to an embodiment, said first moving device 7 comprises at least one pneumatic actuator 15. In other words, said first moving device 7 comprises at least one pneumatically operated actuator, preferably comprising at least one cylinder-piston. For example, said pneumatic actuator 15 is a compressed-air-operated actuator comprising a cylinder-piston assembly, in which the air pressure inside the cylinder of the cylinder-piston assembly locally balances the traction force or pressure to which the sheet of reinforcement fabric 2, preferably the portion of sheet of reinforcement fabric 2 gripped by said gripping device 5, was subjected.

According to an embodiment, said pneumatic actuator 15 is associated with said sensor, in which said sensor detects the air pressure inside the cylinder. In other words, when the pneumatic actuator 15 is controlled by air, said sensor is a pressure gage for adjusting the feeding air pressure of the actuator.

According to an embodiment, said moving device 7 comprises at least one electrical actuator. In other words, said moving device 7 comprises at least one electrically operated or electromechanical actuator. For example, said electrical actuator is a permanent magnet linear motor or a rotary screw motor. According to an embodiment, said electromechanical actuator is associated with said sensor, in which said sensor is a load cell which detects the force or pressure applied to the electromechanical actuator.

According to an embodiment, said at least one sensor is operatively connected to said control and actuating unit 3.

According to an embodiment, said control and actuating unit 3 controls the activation of said moving system in closed loop feedback manner. For example, the feedback control is based on the information on the local stress state detected by said sensor. Preferably, said feedback control comprises a feedback branch, operatively connected to a position sensor 37, which detects information on the position of said gripping device 5.

According to an embodiment, said control and actuating unit 3 controls the activation of said moving system in open loop manner.

According to an embodiment, said first moving device 7 is associated with a compressed air activation circuit, which comprises at least one valve 35, preferably a solenoid valve, operatively connected to said control and actuating unit 3 and operatively connected to a compressor 36, adapted to supply pressurized air to said first actuating device 7. According to an embodiment, said first moving device 7 is operatively connected to said control and actuating unit 3 by means of two activation branches, each of said two activation branches comprising at least one valve 36, in which said two activation branches form two antagonist branches.

According to an embodiment, said at least one sensor is operatively connected to at least one viewing element 31, adapted to show information on the local tension state of the sheet of reinforcement fabric 2.

According to an embodiment, said first moving device 7 comprises two actuators, e.g. two antagonist actuators 38, 39, comprising a first actuator 38 which applies an initial preload onto the sheet of reinforcement fabric 2 keeping it taut during the step of preheating and a second actuator 39 which controls the controlled preforming release.

According to an embodiment, said first moving device 7 comprises at least one pair of antagonist actuators 38, 39. For example, said at least one pair of antagonist actuators comprises a first actuator 38 or approaching actuator 38, adapted to move said gripping device 5 towards said preforming mold 14 during the preforming of said sheet of reinforcement fabric 2, and at least one second actuator 39 or distancing actuator 39, antagonist with respect to said approaching actuator, and adapted to move said gripping device 5 away from said preforming mold 14 during the preforming of said sheet of reinforcement fabric 2. In other words, the antagonist actuators 38, 39 which form said at least one pair of antagonist actuators are adapted to cooperate to move the respective gripping device 5 in opposite senses along a local direction of movement M-M.

According to an embodiment, said frame 4 is a fixed frame, in which the mutual position and orientation of the frame beams 9 which form said frame 4 is rigidly predetermined. According to an embodiment, said frame 4 comprises two pairs of opposite frame beams 9 to form a quadrangular frame structure, in which each frame beam 9 supports at least one gripping device 5 and preferably a multiplicity of gripping devices 5 facing each other and movable in mutually independent manner along said local direction of moving M-M.

According to an embodiment, said frame beams 9 define a frame structure, adapted to surround said sheet of reinforcement fabric 2 at least partially and preferably entirely. In this manner, by providing said gripping devices 5, the sheet of reinforcement fabric 2 can be laid before the step of preforming.

Preferably, said frame beams 9 with which said gripping devices 5 are associated form a frame, which defines a frame plane, which is substantially either parallel to or coinciding with said sheet of reinforcement fabric 2 when it is gripped by said gripping devices which keep it taut before the step of preforming and preferably when said sheet of reinforcement fabric 2 is outside the preforming mold 14. Preferably, said frame plane is substantially horizontal or sub-horizontal.

According to an embodiment, said frame 4 comprises at least one frame upright 33 extending telescopically, and preferably at least one pair of frame uprights 33 extending telescopically. In this manner, the frame 4 is freely oriented, and in particular said frame plane, taking it to a predetermined orientation with respect to the horizontal direction, e.g. when it is in the preforming station 13 of a system 10. Providing said frame uprights 33 extending telescopically allows a better construction versatility of preformed shells having complex or non-regular shape, while guaranteeing satisfactory features of pleasantness of appearance in the distribution of the weft and warp of the sheet of reinforcement fabric 2 during the preforming of the preformed shell.

According to an embodiment, said assembly 1 comprises a plurality of supports 8, either directly or indirectly associated with said frame 4, preferably to a frame beam 9, each support 8 of said plurality of supports 8 also being either directly or indirectly associated with at least one gripping device 5, so as to support said at least one gripping device 5. Preferably, each said support is associated directly with said frame 4 and directly with said gripping device.

Preferably, said assembly comprises a plurality of supports 8, in which each support 8 is preferably directly associated with a respective gripping device 5 and with a respective first moving device 7, so as to support them.

According to an embodiment, said at least one support 8 is hinged to the frame 4.

According to an embodiment, said at least one support 8 is associated with the frame 4 by means of a ball joint.

Preferably, said assembly 1 comprises a plurality of supports 8, in which each support 8 is associated with a respective gripping device 5 and with at least one respective first moving device 7.

According to an embodiment, said first moving device 7 is fixed to said support 8 and each gripping device 5 further comprises a carriage 21 associated with said support 8 and adapted to translate with respect to said support 8 when moved by said first moving device 7. Preferably, said carriage 21 is fitted on said support 8.

According to a preferred embodiment, said first moving device 7 comprises at least one linear actuator, e.g. a linear pneumatic actuator 15, in which a piston 28 of the cylinder-piston assembly applies at least one push on said carriage 21 of the gripping device 5 when it is actuated. Preferably, said linear actuator is adapted to apply also a pulling action opposite to that of said pushing action.

According to an embodiment, said carriage 21 comprises at least one engagement portion 34 which forms an abutment reference for said first moving device 7, when said first moving device 7 is actuated. According to an embodiment, said at least one engagement portion 34 is integrally fixed to a pushing portion of the first moving device 7, e.g. to the piston 38 of the cylinder-piston assembly of the pneumatic actuators 15.

According to an embodiment, said moving system of said assembly 1 further comprises at least one second moving device or moving device of the support, adapted to move each support 8 with respect to said frame 4 independently of the other supports. According to an embodiment, said second support moving device is adapted to move each support 8 with respect to said frame 4, independently of the other supports, and said first moving device 7 is adapted to move each gripping device 5 with respect to said support 8, independently of the other gripping devices.

Preferably, each first moving device 7 is movable independently of each second moving device.

According to an embodiment, said second moving device and said first moving device 7 are the same moving device. In other words, according to an embodiment, said first moving device 7 and said second moving device are integrated in a single component, e.g. in the form of a cartridge.

According to an embodiment, said second moving device moves said support 8 with respect to said frame 4 by a sliding movement in a sliding direction. For example, said sliding direction is orthogonal to said local direction of movement M-M. For example, said sliding direction is either parallel to or coinciding with said local direction of movement M-M. For example, said direction of sliding is orthogonal and coplanar with the direction of longitudinal extension of the beam frame 9, with which said support 8 of the gripping device 5 is associated.

Preferably, said direction of sliding defined by said second moving device is substantially parallel to the direction of longitudinal extension T-T of the beam frame 9, with which said support 8 of the gripping device 5 is associated. According to an embodiment, said frame beam 9 comprises a guiding element 32, e.g. a track 32, adapted to guide the sliding movement of said support 8 with respect to the frame 4 determined by said second moving device.

According to an embodiment, said second moving device moves said support 8 with respect to said frame 4 by a roto-translation movement about at least one rotation axis X-X or Y-Y. According to an embodiment, said rotation axis X-X or Y-Y is movable with respect to said frame 4 defining a roto-translation movement with respect to said frame 4. According to an embodiment, said rotation axis X-X or Y-Y is fixed and said roto-translation movement is a rotation movement about said fixed axis with respect to said frame 4.

According to an embodiment, said first support 8 comprises at least one support joint 16. Preferably, said support joint 16 is at least one of either: a hinge, a bushing, a ball joint adapted to form a spherical plain bearing, and a universal joint.

According to an embodiment, said support 8 is associated with said frame 4 by means of said support joint 16 which guides the rotation of the support 8 with respect to the frame 4. For example, said rotation of the support 8 with respect to the frame 4 occurs about an axis which is transversal, and preferably orthogonal, to the margin portion 6 of the sheet of reinforcement fabric gripped by said gripping device 5, when in working conditions.

According to an embodiment, said support 8 comprises a first plate 17, associated with said frame 4, and a second plate 18, associated with said gripping device 5. Preferably, said support 8 further comprises said at least one support joint 16, e.g. a support hinge 16, which mutually connects said first plate 17 and said second plate 18, guiding the relative roto-translation movement about an axis of movement X-X or Y-Y of said first plate 17 and of said second plate 18, thus forming an articulated support 8 and defining an inclination angle α between said first plate 17 and said second plate 18 of the support 8. According to an embodiment, said moving system, preferably said second moving device, when it is activated moves said second plate 18 in controlled manner with respect to said first plate 17, biasing the inclination angle α.

According to an embodiment, said at least one support joint 16 comprises at least one support hinge, which defines a rotation axis X-X or Y-Y lying on a plane substantially parallel to said frame beams 9 and preferably to the frame beam 9, with which the support 8 is associated. In this manner, said inclination angle α is the angle formed between said plane parallel to the beam frame 9, with which the first plate 17 of the support 8 and the local direction of movement M-M is associated.

According to an embodiment, said moving system comprises at least one elastic element which provides an elastic action which keeps said sheet of reinforcement fabric preloaded by a predetermined pretensioning value, keeping it locally taut. Preferably, during preforming, said elastic action provided by the at least one elastic element biases a respective gripping device 5 away from the preforming mold 14, in order to locally keep said sheet of reinforcement fabric taut.

According to an embodiment, said plurality of gripping devices 5 are distributed, preferably distributed uniformly, along the perimeter of the sheet of reinforcement fabric 2. According to an embodiment, said plurality of gripping devices 5 are arranged mutually and equally spaced apart to surround said sheet of reinforcement fabric 2 by each gripping a margin portion 6 of the sheet of reinforcement fabric.

According to a general embodiment, a system 10 for preforming a sheet of reinforcement fabric 2 comprises at least one assembly 1 according to any one of the embodiments described above.

According to a preferred embodiment, said system 10 comprises at least one preheating station 11 comprising at least one preheating oven 12.

According to a preferred embodiment, said system 10 comprises at least one preforming station 13 comprising at least one preforming mold 14.

According to an embodiment, said at least one preforming mold 14 comprises at least two half-molds 23, 24 which determine the preforming contour, said at least two half-molds 23, 24 closed during the step of preforming and determining the consequent deformation of the sheet of reinforcement fabric 2 to form said preformed shell. Preferably, said two half-molds are mutually contoured. Preferably, said preforming contour is curved. In other words, at least one of said at least two half-molds 23, 24 comprises at least one convex face 25.

According to an embodiment, said at least one preheating station 11 is integrated with said at least one preforming station 13. For example, at least one of said half-molds 23, 24 comprises at least one heating element, e.g. by heat radiation and/or by heat conduction.

According to an embodiment, said system 10 comprises an automatic advancement device, adapted to transport said sheet of reinforcement fabric 2 from said preheating station 11 to said preforming station 13. Preferably, said automatic advancement device is adapted to convey said assembly 1 from said preheating station 11 to said preforming station 13. For example, said automatic advancement device comprises at least one robotic arm, e.g. of the SCARA type and/or at least one conveyor belt.

A preforming method of a sheet of reinforcement fabric for making a preformed shell is described below.

According to a general embodiment, a preforming method of a sheet of reinforcement fabric 2 to make a preformed shell comprises the following steps:
- Providing at least one sheet of reinforcement fabric 2. Preferably, providing at least one pre-impregnated or pre-preg sheet of reinforcement fabric. Preferably, said at least one sheet of reinforcement fabric comprises two opposite faces of reinforcement fabric 26, 27, an edge of reinforcement fabric, which defines the perimeter of said sheet of reinforcement fabric 2, and a plurality of margin portions 6 located near said reinforcement fabric edge.
- Gripping a plurality of respective margin portions 6 of the sheet of reinforcement fabric 2 with a plurality of gripping devices.
- Applying at least one deformation action of the sheet of reinforcement fabric 2. Preferably, said at least one deformation action of the sheet of reinforcement fabric 2 is a plastic deformation action. For example, said at least one deformation action is a thermally induced plastic deformation action, e.g. using a preheating oven 12. For example, said at least one deformation action is a preforming action.
- Moving at least one gripping device 5 and preferably each gripping device 5 in mutually independent manner, so as to guide localized deformations of the sheet of reinforcement fabric 2, which occur during the deformation action of the sheet of reinforcement fabric. Preferably, this step is performed automatically. Preferably, this step is performed by controlling the local stress stage of the sheet of reinforcement fabric 2 and/or detecting the local stress state of the sheet of reinforcement fabric 2 and/or monitoring in a predetermined period of time the local stress state of the sheet of reinforcement fabric 2.

A preformed shell can be obtained by means of such a method.

Providing such method allows obtaining a desired stress distribution on the sheet of reinforcement fabric 2 during the step of applying at least one deformation action on the sheet of reinforcement fabric 2. In other words, said method allows obtaining a desired stress distribution on the sheet of reinforcement fabric 2 and during the step of preheating and during the step of preforming.

Preferably, the aforesaid steps can be provided in succession in the order shown.

According to a possible mode of operation, said method comprises the further step of applying at least one traction pressure action on said reinforcement fabric sheet. Preferably, said traction pressure action is an actuation distributed on a prevalent portion of said sheet of reinforcement fabric 2.

According to a possible mode of operation, said step of applying at least one traction pressure action on said sheet of reinforcement fabric comprises the substep of applying at least one preheating traction pressure action, which is performed in a preheating oven 12.

According to a possible mode of operation, said step of applying at least one traction pressure action on said sheet of reinforcement fabric comprises the substep of applying at least one preforming traction pressure action which is performed in a preforming mold 14.

According to a possible mode of operation, said step of gripping a plurality of margin portions 6 of the sheet of reinforcement fabric 2 by a plurality of gripping devices 5 is performed by keeping said plurality of margin portions 5 of the sheet of reinforcement fabric outside the preforming mold 14. In other words, by gripping said plurality of margin portions 6 said assembly 1 keeps them outside the contour defined by the at least two molding half-shells 23, 24.

According to a possible mode of operation, said step of gripping a plurality of margin portions 6 of the sheet of reinforcement fabric 2 by a plurality of gripping devices 5 is performed by distributing said plurality of gripping devices 5, preferably uniformly, along the entire perimeter of the sheet of reinforcement fabric.

According to a possible mode of operation, said method comprises the further step of consolidating said preformed shell, e.g. by covering it with at least one layer of thermosetting material, preferably reticulated.

By virtue of the features described above, either separately or mutually in combination with particular embodiments, it is possible to obtain an assembly as well as a system, as well as a method which allow responding to the aforesaid, sometimes contrasting needs, offering the aforesaid advantages and in particular:
- the preforming method of a sheet of reinforcement fabric for making a preformed shell can be automated;
- the stress state during the deformation action of the sheet of reinforcement fabric can be locally controlled;
- preformed shells can be made in molds having complex three-dimensional shape and starting from sheets of reinforcement fabric of irregular shape, while allowing excellent features of appearance of the reinforcement fabric;
- the local distortion of the cosmetic pattern or motif defined by said reinforcement fabric is avoided;
- a consolidated preformed shell can be made with transparent or translucent thermosetting material so that the cosmetic motif or pattern of the sheet of pre-impregnated fabric is exposed to sight;
- it allows creating in automatic manner a preformed shell starting from a sheet of reinforcement fabric of the pre-impregnated or pre-preg type or starting from a sheet of reinforcement fabric of the dry type.

A person skilled in art may make many changes, adaptations and replacements to the embodiments described above or may replace elements with others which are functionally equivalent in order to satisfy contingent needs without however departing from the scope of protection of the appended claims.

### LIST OF REFERENCES

- 1.: Assembly
- 2.: Sheet of reinforcement fabric
- 3.: Control and actuating unit
- 4.: Frame
- 5.: Gripping device
- 6.: Margin position of the sheet of reinforcement fabric
- 7.: First moving device
- 8.: Support
- 9.: Frame beam
- 10.: System
- 11.: Preheating station
- 12.: Preheating oven
- 13.: Preforming station
- 14.: Preforming mold
- 15.: Pneumatic actuator
- 16.: Support joint
- 17.: First plate of the support
- 18.: Second plate of the support
- 19.: First jaw of the gripping device
- 20.: Second jaw of the gripping device
- 21.: Carriage of the gripping device
- 22.: Ground contact unit of the frame
- 23.: First half-mold
- 24.: Second half-mold
- 25.: Half-mold convex face
- 26.: First face of the sheet of reinforcement fabric
- 27.: Second face of the sheet of reinforcement fabric
- 28.: Pushing element, or piston
- 29.: Locking device
- 30.: Knob
- 31.: Viewing element
- 32.: Guiding element
- 33.: Frame upright
- 34.: Carriage engagement portion
- 35.: Valve
- 36.: Compressor
- 37.: Position sensor
- 38.: Approaching actuator
- 39.: Distancing actuator
- α.: Inclination angle
- M-M.: Local moving direction
- T-T.: Beam longitudinal direction
- X-X; Y-Y.: Rotation axis

## Claims

1. An assembly (1) for preforming a sheet of reinforcement fabric (2), said sheet of reinforcement fabric (2) being intended to be subjected to at least one deformation action to make a preformed shell, comprising:
- at least one frame (4);
- a plurality of gripping devices (5) adapted to grip the sheet of reinforcement fabric (2), said plurality of gripping devices (5) being associated either directly or indirectly with said at least one frame (4);
wherein:
- each gripping device (5) of said plurality of gripping devices (5) being adapted to grip a margin portion (6) of the sheet of reinforcement fabric (2);
- said assembly (1) further comprises a moving system comprising a plurality of first moving devices (7);
wherein
- movement of each first moving device (7) is independent of that of the other first moving devices;
- each gripping device (5) of said plurality of gripping devices being associated with a first moving device (7);
- said first moving device (7) being adapted to move each gripping device (5) of said plurality of gripping devices independently of the others, so that when said sheet of reinforcement fabric (2) is gripped by said plurality of gripping devices (6), each gripping device can move to guide localized deformations of the sheet of reinforcement fabric (2) which occur during the deformation action of the sheet of reinforcement fabric (2);
**characterized in that**
- said assembly (1) comprises a plurality of supports (8), associated either directly or indirectly with said frame (4), each support (8) of said plurality of supports (8) being also associated either directly or indirectly with at least one gripping device (5) so as to support at least one gripping device (5); and wherein
- each support (8) is associated with a respective gripping device (5) and with a respective first moving device (7); and wherein
- said first moving device (7) is fixed to said support (8) and each gripping device (5) further comprises a carriage (21) associated with said support (8) and adapted to translate with respect to said support (8) when moved by said first moving device (7);
and wherein
- at least one support (8) comprises at least one support joint (16); and wherein
- said support (8) is associated with said frame (4) by means of said support joint (16) which guides the rotation of the support (8) with respect to the frame (4).

2. An assembly according to claim **1,** wherein the independent movement of each gripping device (6) of said plurality of gripping devices is controlled as a function of the local force or of the local traction pressure to which the sheet of reinforcement fabric (2) was subjected to obtain a stress distribution locally of desired value on the sheet of reinforcement fabric (2).

3. An assembly (1) according to claim **1** or **2,** wherein are provided one or more of the following alternatives
- said assembly comprising at least one sensor which locally detects the force or traction pressure to which the sheet of reinforcement fabric (2) was subjected; or wherein
- said assembly (1) comprising at least one control and actuating unit (3) and at least one sensor which locally detects the force or traction pressure to which the sheet of reinforcement fabric (2) was subjected, said least one control and actuating unit (3) receives information from said at least one sensor and transmits at least one control signal to the moving system; or wherein
- said assembly (1) comprising at least one control and actuating unit (3) and said control and actuating unit (3) controls the activation of said moving system in closed loop feedback manner; or wherein
- said assembly (1) comprising at least one control and actuating unit (3) and said control and actuating unit (3) controls the activation of said moving system in open loop manner.

4. An assembly (1) according to any one of the preceding claims, wherein said first moving device (7) comprises at least one pneumatic actuator (15) or at least one electrically operated actuator; or wherein
- said first moving device (7) comprises at least one pair of antagonist actuators (38, 39) adapted to cooperate to move the respective gripping device (5) in opposite senses along a local direction of movement (M-M).

5. An assembly (1) according to claim **1,** wherein
- said support joint (16) is at least one of either: a hinge, a bushing, a ball joint adapted to form a spherical plain bearing, and a universal joint; or wherein
- said support (8) comprises a first plate (17), associated with said frame (4), and a second plate (18) associated with at least said gripping device (5), wherein said support joint (16) mutually connects said first plate (17) and said second plate (18) guiding the respective roto-translation movement between said first plate (17) and said second plate (18) about a moving axis (X-X) or (Y-Y), forming in this manner an **articulated support (8) and defining an inclination angle (α) between said first plate (17)** and said second plate (18) of the support (8).

6. An assembly (1) according to any one of the preceding claims 1 or **5,** wherein the moving system further comprises a second moving device, adapted to move each support (8) with respect to said frame (4) independently of the other supports; or wherein
- each first moving device (7) is movable independently of each second moving device; or wherein
- said first moving device (7) and a second moving device adapted to move each support (8) with respect to said frame (4) independently of the other supports are integrated in a single component.

7. An assembly (1) according to any one of the preceding claims, wherein said moving system comprises at least one elastic element which provides an elastic action which keeps said sheet of reinforcement fabric (2) preloaded, keeping it locally taut.

8. An assembly (1) according to any one of the preceding claims, wherein said plurality of gripping devices (5) are distributed, preferably uniformly distributed, along the perimeter of the sheet of reinforcement fabric (2).

9. A system (10) for preforming a sheet of reinforcement fabric (2), comprising:
- at least one assembly (1) according to any one of the preceding claims;
- at least one preheating station (11), comprising at least one preheating oven (12);
- at least one preforming station (13), comprising at least one preforming mold (14).

10. A preforming method of a sheet of reinforcement fabric (2) to make a preformed shell implementing the assembly (1) of claim 1 and comprising the following steps:
- providing an assembly (1) according to claim 1;
- providing at least one sheet of reinforcement fabric (2);
- gripping with a plurality of gripping devices a plurality of respective margin portions (6) of the sheet of reinforcement fabric (2);
- moving at least one gripping device (5) independently of the others, so as to guide localized deformations of the sheet of reinforcement fabric (2) which arise during the deformation action of the sheet of reinforcement fabric (2);
- moving each gripping device (5) independently of the others.

11. A method according to claim 10, comprising the further step of applying at least one traction pressure action on said reinforcement fabric sheet (2).

12. A method according to any one of the preceding claims from 10 to 11, wherein:
- the step of moving at least one gripping device (5) independently of the others is performed by controlling the local stress state of the sheet of reinforcement fabric (2) and/or detecting the local stress state of the sheet of reinforcement fabric (2). and/or wherein
- the step of moving at least one gripping device (5) independently of the others is performed automatically.

13. A method according to any one of the preceding claims from 10 to 12, wherein:
- the step of gripping a plurality of margin portions (6) of the sheet of reinforcement fabric (2) with a plurality of gripping devices (5) is performed by keeping said plurality of margin portions (5) of the sheet of reinforcement fabric outside the preforming mold (14); and/or wherein
- said step of gripping a plurality of margin portions (6) of the sheet of reinforcement fabric (2) with a plurality of gripping devices (5) is performed by distributing said plurality of gripping devices (5) preferably along the entire perimeter of the sheet of reinforcement fabric; and/or wherein
- said method comprises the further step of consolidating said preformed shell, e.g. by covering it with at least one layer of thermosetting material.

## Patentansprüche

1. Anordnung (1) zum Vorformen einer Verstärkungstuchschicht (2), wobei die Verstärkungstuchschicht (2) dazu dient, zumindest einer Verformungsaktion unterzogen zu werden, um eine vorgeformte Schale herzustellen, umfassend:
- zumindest einen Rahmen (4);
- eine Mehrzahl von Greifvorrichtungen (5), die dazu ausgelegt sind, die Verstärkungstuchschicht (2) zu ergreifen, wobei die Mehrzahl von Greifvorrichtungen (5) dem zumindest einen Rahmen (4) entweder direkt oder indirekt zugeordnet sind;
wobei:
- jede Greifvorrichtung (5) der Mehrzahl von Greifvorrichtungen (5) dazu ausgelegt ist, einen Randabschnitt (6) der Verstärkungstuchschicht (2) zu ergreifen;
- die Anordnung (1) ferner ein Bewegungssystem aufweist, das eine Mehrzahl erster Bewegungsvorrichtungen (7) aufweist; wobei
- eine Bewegung jeder ersten Bewegungsvorrichtung (7) von jener der anderen ersten Bewegungsvorrichtungen unabhängig ist;
- jede Greifvorrichtung (5) der Mehrzahl von Greifvorrichtungen einer ersten Bewegungsvorrichtung (7) zugeordnet ist;
- die erste Bewegungsvorrichtung (7) dazu ausgelegt, jede Greifvorrichtung (5) der Mehrzahl von Greifvorrichtungen unabhängig von den anderen zu bewegen, so dass dann, wenn die Verstärkungstuchschicht (2) von der Mehrzahl von Greifvorrichtungen (6) ergriffen wird, sich jede Greifvorrichtung bewegen kann, um lokalisierte Verformungen der Verstärkungstuchschicht (2), die während der Verformungsaktion der Verstärkungstuchschicht (2) auftreten, zu führen;
**dadurch gekennzeichnet, dass**
- die Anordnung (1) eine Mehrzahl von Trägern (8) aufweist, die dem Rahmen (4) entweder direkt oder indirekt zugeordnet sind, wobei jeder Träger (8) der Mehrzahl von Trägern (8) auch entweder direkt oder indirekt zumindest einer Greifvorrichtung (5) zugeordnet ist, um zumindest eine Greifvorrichtung (5) zu tragen; und wobei
- jeder Träger (8) einer jeweiligen Greifvorrichtung (5) und einer jeweiligen ersten Bewegungsvorrichtung (7) zugeordnet ist; und wobei
- die erste Bewegungsvorrichtung (7) an dem Träger (8) befestigt ist und jede Greifvorrichtung (5) einen Schlitten (21) aufweist, der dem Träger (8) zugeordnet und dazu ausgelegt ist, in Bezug auf den Träger (8) eine Translationsbewegung durchzuführen, wenn er von der ersten Bewegungsvorrichtung (7) bewegt wird,
und wobei
- zumindest ein Träger (8) zumindest ein Traggelenk (16) aufweist; und wobei
- der Träger (8) dem Rahmen (4) mittels des Traggelenks (16) zugeordnet ist, das die Drehung des Trägers (8) in Bezug auf den Rahmen (4) führt.

2. Anordnung nach Anspruch 1, wobei die unabhängige Bewegung jeder Greifvorrichtung (6) der Mehrzahl von Greifvorrichtungen als Funktion der lokalen Kraft oder des lokalen Traktionsdrucks, dem die Verstärkungstuchschicht (2) ausgesetzt wurde, gesteuert wird, um eine lokale Spannungsverteilung eines gewünschten Werts auf der Verstärkungstuchschicht (2) zu erhalten.

3. Anordnung (1) nach Anspruch 1 oder 2, wobei einer oder mehrere der folgenden Alternativen vorgesehen sind:
- die Anordnung umfasst zumindest einen Sensor, der die Kraft oder den Traktionsdruck, die oder dem die Verstärkungstuchschicht (2) unterzogen wurde, lokal detektiert, oder
wobei
- die Anordnung (1) zumindest eine Steuer- und Betätigungseinheit (3) und zumindest einen Sensor aufweist, der die Kraft oder den Traktionsdruck, dem die Verstärkungstuchschicht (2) unterzogen wurde, lokal detektiert, wobei die zumindest eine Steuer- und Betätigungseinheit (3) Information von dem zumindest einen Sensor empfängt und zumindest ein Steuersignal zu dem Bewegungssystem sendet; oder wobei
- die Anordnung (1) zumindest eine Steuer- und Betätigungseinheit (3) aufweist und die Steuer- und Betätigungseinheit (3) die Aktivierung des Bewegungssystems in geschlossener Rückkopplung regelt; oder wobei
- die Anordnung (1) zumindest eine Steuer- und Betätigungseinheit (3) aufweist und die Steuer- und Betätigungseinheit (3) die Aktivierung des Bewegungssystems offenschleifig steuert.

4. Anordnung (1) nach einem der vorhergehenden Ansprüche, wobei die erste Bewegungsvorrichtung (7) zumindest einen pneumatischen Aktuator (15) oder zumindest einen elektrisch betriebenen Aktuator aufweist; oder wobei die erste Bewegungsvorrichtung (7) zumindest ein Paar von antagonistischen Aktuatoren (38, 39) aufweist, die zur Kooperation ausgelegt sind, um die jeweilige Greifvorrichtung (5) entlang einer örtlichen Bewegungsrichtung (M-M) gegensinnig zu bewegen.

5. Anordnung (1) nach Anspruch 1, wobei
- das Traggelenk (16) zumindest eines ist von: einem Scharnier, einer Buchse, einem Kugelgelenk, das zur Bildung eines Kugelflächenlagers ausgelegt ist; und einem Universalgelenk; oder wobei
- der Träger (8) eine erste Platte (17), die dem Rahmen (4) zugeordnet ist, sowie eine zweite Platte (18), die zumindest der Greifvorrichtung (5) zugeordnet ist, aufweist, wobei das Traggelenk (16) die erste Platte (17) mit der zweiten Platte (18) verbindet, um eine um die jeweilige Dreh-Translationsbewegung zwischen der ersten Platte (17) und der zweiten Platte (18) um die Bewegungsachse (X-X) oder (Y-Y) zu führen, um auf diese Weise einen Gelenkträger (8) zu bilden und einen Neigungswinkel (α) zwischen der ersten Platte (17) und der zweiten Platte (18) des Trägers (8) zu definieren.

6. Anordnung (1) nach einem der vorhergehenden Ansprüche 1 oder 5, wobei das Bewegungssystem ferner eine zweite Bewegungsvorrichtung aufweist, die dazu ausgelegt ist, jeden Träger (8) in Bezug auf den Rahmen (4) unabhängig von den anderen Trägern zu bewegen; oder wobei
- jede erste Bewegungsvorrichtung (7) unabhängig von jeder zweiten Bewegungsvorrichtung bewegbar ist; oder wobei
- die erste Bewegungsvorrichtung (7) und eine zweite Bewegungsvorrichtung, die dazu ausgelegt sind, jeden Träger (8) in Bezug auf den Rahmen (4) unabhängig von den anderen Trägern zu bewegen, zu einer einzigen Komponente integriert sind.

7. Anordnung (1) nach einem der vorhergehenden Ansprüche, wobei das Bewegungssystem zumindest ein elastisches Element aufweist, das eine elastische Aktion liefert, die die Verstärkungstuchschicht (2) vorbelastet hält, wobei sie sie örtlich straff hält.

8. Anordnung (1) nach einem der vorhergehenden Ansprüche, wobei die Mehrzahl von Greifvorrichtungen (5) entlang dem Umfang der Verstärkungstuchschicht (2) verteilt, bevorzugt gleichmäßig verteilt sind.

9. System (10) zum Vorformen einer Verstärkungstuchschicht (2), umfassend:
- zumindest eine Anordnung (1) nach einem der vorhergehenden Ansprüche;
- zumindest eine Vorheizstation (11), die zumindest einen Vorheizofen (12) aufweist;
- zumindest eine Vorformstation (13), die zumindest eine Vorform-Form (14) aufweist.

10. Vorformungsverfahren einer Verstärkungstuchschicht (2), um eine vorgeformte Schale herzustellen, wobei es die Anordnung (1) von Anspruch 1 implementiert und die folgenden Schritte aufweist:
- Bereitstellen einer Anordnung (1) nach Anspruch 1;
- Bereitstellen von zumindest einer Verstärkungstuchschicht (2);
- Ergreifen einer Mehrzahl jeweiliger Randabschnitte (6) der Verstärkungstuchschicht (2) mit einer Mehrzahl von Greifvorrichtungen;
- Bewegen von zumindest einer Greifvorrichtung (5) unabhängig von den anderen, um lokalisierte Verformungen der Verstärkungstuchschicht (2) zu führen, die während der Verformungsaktion der Verstärkungstuchschicht (2) auftreten;
- Bewegen jeder Greifvorrichtung (5) unabhängig von den anderen.

11. Verfahren nach Anspruch 10, die den weiteren Schritt aufweist, zumindest eine Traktionsdruckwirkung auf die Verstärkungstuchschicht (2) auszuüben.

12. Verfahren nach einem der vorhergehenden Ansprüche von 10 bis 11, wobei
- der Schritt des Bewegens von zumindest einer Greifvorrichtung (5) unabhängig von den anderen durchgeführt wird, indem der lokale Spannungszustand der Verstärkungstuchschicht (2) gesteuert wird und/oder der lokale Spannungszustand der Verstärkungstuchschicht (2) detektiert wird; und/oder wobei
- der Schritt des Bewegens der zumindest einen Greifvorrichtung (5) unabhängig von den anderen automatisch durchgeführt wird.

13. Verfahren nach einem der vorhergehenden Ansprüche von 10 bis 12, wobei
- der Schritt des Ergreifens einer Mehrzahl von Randabschnitten (6) der Verstärkungstuchschicht (2) mit einer Mehrzahl von Greifvorrichtungen (5) durchgeführt wird, indem die Mehrzahl von Randabschnitten (5) der Verstärkungstuchschicht außerhalb der Vorform-Form (14) gehalten werden; und/oder wobei
- der Schritt des Ergreifens einer Mehrzahl von Randabschnitten (6) der Verstärkungstuchschicht (2) mit einer Mehrzahl von Greifvorrichtungen (5) durchgeführt wird, indem die Mehrzahl von Greifvorrichtungen (5) bevorzugt entlang dem Gesamtumfang der Verstärkungstuchschicht verteilt werden; und/oder wobei
- das Verfahren den weiteren Schritt aufweist, die vorgeformte Schale zu verfestigen, zum Beispiel durch Abdecken derselben mit zumindest einer Lage aus wärmehärtendem Material.

## Revendications

1. Ensemble (1) pour préformer une feuille de tissu de renforcement (2), la feuille de tissu de renforcement (2) étant destinée à être soumise à au moins une action de déformation pour fabriquer une coque préformée, comprenant
- au moins un cadre (4),
- une pluralité de dispositifs de saisie (5) adaptés pour saisir la feuille de tissu de renforcement (2), la pluralité de dispositifs de saisie (5) étant associés soit directement soit indirectement audit au moins un cadre (4),
où
- chaque dispositif de saisie (5) de la pluralité de dispositifs de saisie (5) est adapté pour saisir une partie de bord (6) de la feuille de tissu de renforcement (2) ;
- l'ensemble (1) comprend en outre un système de déplacement comprenant une pluralité de premiers dispositifs de déplacement (7),
où
- le déplacement de chaque premier dispositif de déplacement (7) est indépendant de celui des autres premiers dispositifs de déplacement (7) ;
- chaque dispositif de saisie (5) de la pluralité de dispositifs de saisie étant associé à un premier dispositif de déplacement (7),
- le premier dispositif de déplacement (7) étant adapté pour déplacer chaque dispositif de saisie (5) de la pluralité de dispositifs de saisie indépendamment les uns des autres si bien que, lorsque la feuille de tissu de renforcement (2) est saisie par la pluralité de dispositifs de saisie (5), chaque dispositif de saisie peut se déplacer pour guider des déformations locales de la feuille de tissu de renforcement (2) qui surviennent pendant l'action de déformation de la feuille de tissu de renforcement (2) ;
**caractérisé en ce que**
- l'ensemble (1) comprend une pluralité de supports (8) associés soit directement soit indirectement au cadre (4), chaque support (8) de la pluralité de supports (8) étant également associé soit directement soit indirectement à au moins un dispositif de saisie (5) afin de supporter au moins un dispositif de saisie (5), et **en ce que**
- chaque support (8) est associé à un dispositif de saisie (5) respectif et à un premier dispositif de déplacement (7) respectif, et **en ce que**
- le premier dispositif de déplacement (7) est fixé au support (8) et chaque dispositif de saisie (5) comprend en outre un chariot (21) associé au support (8) et adapté pour se déplacer par rapport au support (8) lorsqu'il est déplacé par le premier dispositif de déplacement (7), et **en ce que**
- au moins un support (8) comprend au moins une articulation de support (16), et **en ce que**
- le support (8) est associé au cadre (4) par l'articulation de support (16) qui guide la rotation du support (8) par rapport au cadre (4).

2. Ensemble selon la revendication 1, **caractérisé en ce que** le déplacement indépendant de chaque dispositif de saisie (6) de la pluralité de dispositifs de saisie est commandé comme une fonction de la force locale ou de la pression de traction locale à laquelle la feuille de tissu de renforcement (2) a été exposée pour obtenir localement une répartition d'effort d'une valeur voulue sur la feuille de tissu de renforcement (2).

3. Ensemble (1) selon la revendication 1 ou 2, **caractérisé en ce qu'**une ou plusieurs des alternatives suivantes sont données :
- l'ensemble comprend au moins un capteur qui détecte localement l'effort ou la pression de traction à laquelle la feuille de tissu de renforcement (2) a été exposée ; ou **en ce que**
- l'ensemble (1) comprend au moins une unité de commande et d'actionnement (3) et au moins un capteur qui détecte localement l'effort ou la pression de traction à laquelle la feuille de tissu de renforcement (2) a été exposée, ladite au moins une unité de commande et d'actionnement (3) reçoit des informations dudit au moins un capteur et transmet au moins un signal de commande au système de déplacement ; ou **en ce que**
- l'ensemble (1) comprend au moins une unité de commande et d'actionnement (3) et l'unité de commande et d'actionnement (3) commande l'activation du système de déplacement à la façon d'un retour en boucle fermée ; ou **en ce que**
- l'ensemble (1) comprend au moins une unité de commande et d'actionnement (3) et l'unité de commande et d'actionnement (3) commande l'activation du système de déplacement à la façon d'une boucle ouverte.

4. Ensemble (1) selon l'une des revendications précédentes, **caractérisé en ce que** le premier dispositif de déplacement (7) comprend au moins un actionneur pneumatique (15) ou au moins un actionneur commandé électriquement ; ou **en ce que**
- le premier dispositif de déplacement (7) comprend au moins une paire d'actionneurs antagonistes (38, 39) adaptés pour coopérer pour déplacer le dispositif de saisie (5) respectif dans des sens opposés le long d'une direction locale de déplacement (M-M).

5. Ensemble (1) selon la revendication 1, **caractérisé en ce que**
- l'articulation de support (16) est au moins une parmi une charnière, une douille, une tête sphérique adaptée pour former une rotule axiale, et un joint universel ; ou **en ce que**
- le support (8) comprend une première plaque (17) associée au cadre (4) et une deuxième plaque (18) associée au moins au dispositif de saisie (5), l'articulation de support (16) reliant, l'une à l'autre, la première plaque (17) et la deuxième plaque (18) guidant le déplacement respectif de translation-rotation entre la première plaque (17) et la deuxième plaque (18) autour d'un axe de déplacement (X-X) ou (Y-Y), formant de cette façon un support articulé (8) et définissant un angle d'inclinaison (α) entre la première plaque (17) et la deuxième plaque (18) du support (8).

6. Ensemble (1) selon l'une des revendications précédentes 1 ou 5, **caractérisé en ce que** le système de déplacement comprend en outre un deuxième dispositif de déplacement, adapté pour déplacer chaque support (8) par rapport au cadre (4) indépendamment des autres supports ; ou **en ce que**
- chaque premier dispositif de déplacement (7) est déplaçable indépendamment de chaque deuxième dispositif de déplacement ; ou **en ce que**
- le premier dispositif de déplacement (7) et un deuxième dispositif de déplacement adaptés pour déplacer chaque support (8) par rapport au cadre (4) indépendamment des autres supports, sont intégrés dans un seul composant.

7. Ensemble (1) selon l'une des revendications précédentes, **caractérisé en ce que** chaque système de déplacement comprend au moins un élément élastique qui apporte une action élastique qui maintient la feuille de tissu de renforcement (2) sous tension, la gardant localement tendue.

8. Ensemble (1) selon l'une des revendications précédentes, **caractérisé en ce que** la pluralité de dispositifs de saisie (5) sont répartis, de préférence répartis de façon uniforme, le long d'un périmètre de la feuille de tissu de renforcement (2).

9. Système (10) pour préformer une feuille de tissu de renforcement (2), comprenant :
- au moins un ensemble (1) selon l'une des revendications précédentes,
- au moins une station de préchauffage (11) comprenant au moins un four de préchauffage (12),
- au moins une station de préformage (13) comprenant au moins un moule de préformage (14).

10. Procédé de préformage d'une feuille de tissu de renforcement (2) pour former une coque préformée mettant en œuvre l'ensemble (1) selon la revendication 1 et comprenant les étapes suivantes :
- mettre à disposition un ensemble (1) selon la revendication 1,
- mettre à disposition au moins une feuille de tissu de renforcement (2),
- saisir avec une pluralité de dispositifs de saisie une pluralité de parties de bord (6) respectives de la feuille de tissu de renforcement (2),
- déplacer au moins un dispositif de saisie (5) indépendamment des autres afin de guider des déformations locales de la feuille de tissu de renforcement (2) qui apparaissent pendant l'action de déformation de la feuille de tissu de renforcement (2),
- déplacer chaque dispositif de saisie (5) indépendamment des autres.

11. Procédé selon la revendication 10, comprenant l'étape supplémentaire d'appliquer au moins une action de pression de traction sur la feuille de tissu de renforcement (2).

12. Procédé selon l'une des revendications précédentes 10 à 11, **caractérisé en ce que**
- l'étape de déplacer au moins un dispositif de saisie (5) indépendamment des autres est effectuée en commandant l'état d'effort local de la feuille de tissu de renforcement (2) et/ou détectant l'état d'effort local de la feuille de tissu de renforcement (2) et/ou **en ce que**
- l'étape de déplacer au moins un dispositif de saisie (5) indépendamment des autres est effectuée automatiquement.

13. Procédé selon l'une des revendications précédentes 10 à 12, **caractérisé en ce que**
- l'étape de saisir une pluralité de parties de bord (6) de la feuille de tissu de renforcement (2) avec une pluralité de dispositifs de saisie (5) est effectuée en gardant la pluralité de parties de bord (6) de la feuille de tissu de renforcement à l'extérieur du moule de préformage (14), et/ou **en ce que**
- l'étape de saisir une pluralité de parties de bord (6) de la feuille de tissu de renforcement (2) avec une pluralité de dispositifs de saisie (5) est effectuée en répartissant la pluralité de dispositifs de saisie (5) de préférence le long du périmètre entier de la feuille de tissu de renforcement, et/ou **en ce que**
- le procédé comprend l'étape supplémentaire de consolider la coque préformée, par exemple en la recouvrant avec au moins une couche d'un matériau thermodurcissable.
